# EUROPÄISCHE PATENTANMELDUNG

(11) **EP 1 094 653 A2**
(43) Veröffentlichungstag der Anmeldung: **25.04.2001**
(21) Anmeldenummer: 00122577.0
(22) Anmeldetag: 17.10.2000
(51) Int. Cl.: H04M 1/725

(54) **Telefon, insbesondere mobiles oder schnurloses Telefon**

(30) Priorität: 22.10.1999 DE 19950907
(71) Anmelder: GRUNDIG Aktiengesellschaft, 90471 Nürnberg (DE)
(72) Erfinder: Friebe, Markus, 90419 Nürnberg (DE)

(57) **Zusammenfassung**

Die vorliegende Erfindung betrifft ein Telefon, insbesondere ein mobiles oder schnurloses Telefon.

Die bekannten Telefone, welche die Benutzer der Telefone ständig mit sich führen, wie beispielsweise mobile oder schnurlose Telefone, weisen den Nachteil auf, daß sie bei eingehenden Gesprächen in bestimmten Situationen als störend empfunden werden können.

Bei dem erfindungsgemäßen Telefon, insbesondere einem mobilen oder schnurlosen Telefon, werden derartige Störungen dadurch vermieden, daß eine Bedieneinrichtung vorgesehen ist, welche die Führung einer nonverbalen Kommunikation durch die Auswahl festgelegter Antworten ermöglicht.

## Beschreibung

Die vorliegende Erfindung betrifft ein Telefon, insbesondere ein mobiles oder schnurloses Telefon.

Die bekannten Telefone, welche die Benutzer der Telefone ständig mit sich führen, wie beispielsweise mobile oder schnurlose Telefone, weisen den Nachteil auf, daß sie bei eingehenden Gesprächen als störend empfunden werden können, wenn der Benutzer des mobilen Telefons sich zu diesem Zeitpunkt beispielsweise in einer Besprechung befindet. Durch den Signalton des mobilen Telefons, mit dem das eingehende Gespräch angekündigt wird, kann es dabei zu einer erheblichen Störung kommen.

Zur Vermeidung derartiger Störungen sind mobile Telefone vorgeschlagen worden, die über einen Vibrationsmechanismus verfügen. Der Vibrationsmechanismus ist beispielsweise in einem austauschbaren Akku integriert, der zur Energieversorgung an das mobile Telefon angebracht wird. Bei einem eingehenden Gespräch vibriert dieser Vibrationsmechanismus. Falls der Benutzer das mobile Telefon am Körper trägt, beispielsweise in einer Hosen- oder Jackentasche, wird er durch die vom Vibrationsmechanismus erzeugten Vibrationen auf das eingehende Gespräch aufmerksam, um es gegebenenfalls anzunehmen.

Falls sich der Benutzer dazu entscheidet das Gespräch anzunehmen kommt es aber wieder zu einer Störung des Umfelds in dem sich der Benutzer aufhält. Dies kann nur vermieden werden, falls sich der Benutzer dazu entscheidet sein gegenwärtiges Umfeld, beispielsweise die oben erwähnte Besprechung, zu verlassen. Dies kann aber unter Umständen als mindestens genau so störend empfunden werden, wie das zu führende Gespräch.

Es ist daher Aufgabe der vorliegenden Erfindung, ein Telefon anzugeben, insbesondere ein mobiles oder schnurloses Telefon, mit dem es möglich ist, ein eingehendes Gespräch anzunehmen und eine zumindest eingeschränkte Kommunikation mit dem Anrufenden zu führen, ohne daß es zu einer Störung des Umfelds kommt, in dem sich der Benutzer des mobilen Telefons zum Zeitpunkt des Gesprächseingangs befindet.

Bei der vorliegenden Erfindung wird diese Aufgabe durch die Merkmale des Anspruchs 1 gelöst.

Bei dem erfindungsgemäßen Telefon, insbesondere einem mobilen oder schnurlosen Telefon, wird dabei von der Überlegung ausgegangen, eine Bedieneinrichtung zur Verfügung zu stellen, welche die Führung einer nonverbalen Kommunikation durch die Auswahl festgelegter Antworten ermöglicht.

Der Vorteil des erfindungsgemäßen mobilen Telefons ist darin zu sehen, daß es durch die Benutzung des mobilen Telefons nicht zu Störungen des Umfelds kommt, in dem sich der Benutzer des Telefons befindet.

Weitere Vorteile der vorliegenden Erfindung ergeben sich aus den abhängigen Ansprüchen sowie der nachfolgenden Beschreibung einer Ausführungsform eines erfindungsgemäßen Telefons anhand von Figuren.

Es zeigt:
- Fig. 1: eine mögliche Ausführungsform einer Bedieneinrichtung für ein erfindungsgemäßes Telefon, und
- Fig. 2: ein Prinzipschaltbild einer Ausführungsform eines erfindungsgemäßen Telefons.

Zur Erleichterung des Verständnisses der vorliegenden Erfindung sind in den Figuren nur die Bestandteile des Ausführungsbeispiels dargestellt, die im Zusammenhang mit der Erfindung von Bedeutung sind. Gleiche Bestandteile in den Figuren weisen gleiche Bezugszeichen auf.

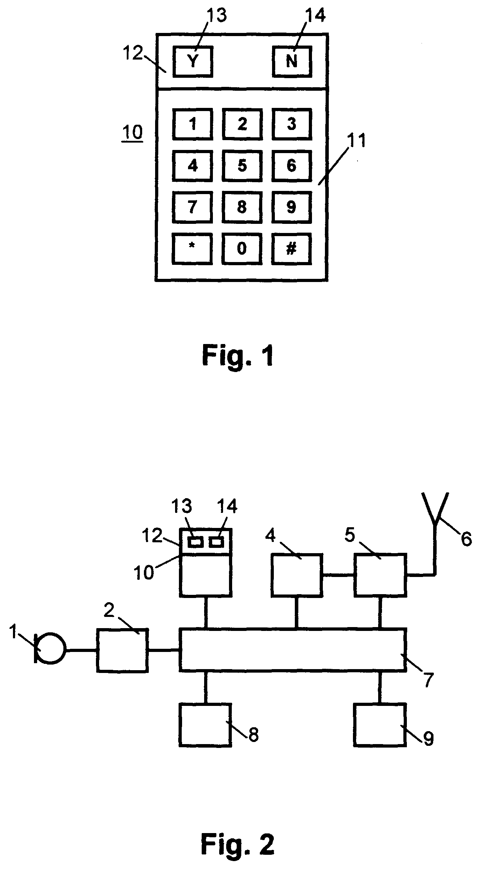

Figur1 zeigt eine Ausführungsform einer Bedieneinrichtung 10 eines erfindungsgemäßen Telefons. Die Bedieneinrichtung 10 weist einen ersten und einen zweiten Teil 11 und 12 auf. Der erste Teil 11 der Bedieneinrichtung 10 entspricht einem bekannten numerischen Tastenblock, wie er üblicherweise bei Telefonen vorhanden ist. Der zweite Teil 12 der Bedieneinrichtung 10 weist eine erste und eine zweite Taste 13 und 14 auf. Wird ein eingehendes Gespräch beispielsweise mittels eines Vibrationsmechanismus angezeigt, kann der Benutzer des Telefons dieses Gespräch annehmen und über einen im Telefon eingebauten Lautsprecher hören, ohne für sein Umfeld sehr störend zu wirken. Um dem Anrufenden antworten zu können, verwendet der Benutzer die erste und zweite Taste 13 und 14. Betätigt er die erste Taste 13, wird dem Anrufenden Zustimmung signalisiert, wohingegen bei Betätigung der zweiten Taste 14 Ablehnung signalisiert wird.

Es ist offensichtlich, daß das Telefon neben der dargestellten ersten und zweiten Taste 13 und 14 weitere Tasten aufweisen kann, die dem Anrufenden andere Antworten signalisieren, wie z. B. Unentschlossenheit oder den Namen den Benutzers des Telefons. Weiterhin ist es von Vorteil, eine Taste vorzusehen, die nach Annahme des Gesprächs aktiviert wird, um dem Anrufenden zu signalisieren, daß der Benutzer des Telefons zur Beantwortung nicht selbst spricht, sondern nur entsprechende Signale erzeugt. Unter Umgehung einer eigenen, zusätzlichen Taste kann eine entsprechende Information auch nach der Angabe des Namens des Benutzers erzeugt werden, oder nach Betätigung einer unten beschriebenen Auswahltaste.

Eine weitere Möglichkeit ist es, nur eine Auswahltaste zur Verfügung zu stellen, mit der das Telefon auf nonverbale Kommunikation umgestellt werden kann. Die Beantwortung eines eingehenden Anrufs ist dann nach Betätigung der Auswahltaste beispielsweise über die Tasten des numerischen Tastenblocks 11 möglich. Den einzelnen Tasten ist dann eine bestimmte Antwort zugeordnet, der Taste 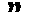 1" beispielsweise 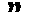 Ja", der Taste 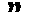 0" beispielsweise 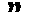 Nein" usw. Auf eine separate Auswahltaste kann auch verzichtet werden, wenn die nonverbale Kommunikation über eine an sich bekannte Menüsteuerung ausgewählt werden kann.

Figur 2 zeigt ein Prinzipschaltbild einer Ausführungsform eines erfindungsgemäßen Telefons. Dargestellt ist ein Mikrophon 1, wie es üblicherweise in einem mobilen Telefon verwendet wird, das an eine bekannte erste Signalverarbeitungseinrichtung 2 angeschlossen ist. Die erste Signalverarbeitungseinrichtung 2 umfaßt beispielsweise einen Verstärker und einen Analog/Digital-Wandler. Das digitalisierte Ausgangssignal der ersten Signalverarbeitungseinrichtung 2 wird an eine Verarbeitungseinrichtung 7 weitergegeben. Die Verarbeitungseinrichtung 7 kann die Steuerung aller Funktionen und Einzelteile des mobilen Telefons übernehmen und beispielsweise von einem Mikroprozessor oder einem digitalen Signalprozessor gebildet werden. An den Mikroprozessor 7 ist ein Arbeitsspeicher 8 und ein nichtflüchtiger Speicher 9, beispielsweise ein E²PROM-Speicher, in dem die zur Steuerung des mobilen Telefons benötigten Programme gespeichert werden, angeschlossen. Außerdem ist eine zweite Signalverarbeitungseinrichtung 4, die einen Digital/Analog-Wandler und einen Verstärker umfaßt, sowie eine mit der zweiten Signalverarbeitungseinrichtung 4 verbundene Hochfrequenzstufe 5 an den Mikroprozessor 7 angeschlossen. Weiterhin ist an den Mikroprozessor 7 die im Zusammenhang mit Figur 1 beschriebene Bedieneinrichtung 10 angeschlossen. Das Ausgangssignal der Hochfrequenzstufe 5 wird über eine Antenne 6 gesendet. Statt der dargestellten direkten Verbindung der einzelnen Bestandteile des mobilen Telefons mit dem Mikroprozessor 7 ist es auch möglich, die einzelnen Bestandteile über Daten- und/oder Steuerbusse an den Mikroprozessor 7 anzuschließen.

Für den Betrieb in nonverbaler Kommunikation werden digitalisierte Sprachsignale im nichtflüchtigen Speicher 9 gespeichert. Beispielsweise können bereits ab Werk Sprachsignale wie 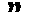 Ja" oder 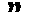 Nein" gespeichert sein. Ebenso ist es möglich, daß der Benutzer des mobilen Telefons entsprechende Sprachsignale mittels des Mikrophons 1 aufnimmt und unter Steuerung des Mikroprozessors 7 im nichtflüchtigen Speicher 9 ablegt. In diesem Fall können beliebige Informationen, z. B. auch der Name des Benutzers, gespeichert werden. Eine weitere Möglichkeit zur Erzeugung von Sprachsignalen stellt die Verwendung eines Sprachsynthesisers dar, der die gewünschten Sprachsignale künstlich erzeugt.

Im Betrieb, d. h. nach Eingang eines Gesprächs, kann der Benutzer das Gesprach annehmen und mittels einer speziellen (nicht dargestellten) Taste des zweiten Teils 12 der Bedieneinrichtung 10 dem Anrufenden mitteilen, daß er beabsichtigt eine nonverbale Kommunikation zu führen, d. h. nicht durch selbst gesprochene Worte auf die Mitteilungen des Anrufenden zu reagieren. Statt eine spezielle Taste zu verwenden kann es auch vorgesehen sein, daß die entsprechende Mitteilung beispielsweise durch die erstmalige Betätigung einer der Tasten 13 und/oder 14 des zweiten Teils 12 der Bedieneinrichtung 10 ausgelöst wird. Dazu wird nach Betätigung einer der Tasten 13 und/oder 14 die entsprechende Mitteilung durch den Mikroprozessor 7 aus dem nichtflüchtigen Speicher 9 gelesen und an die zweite Signalverarbeitungseinrichtung 4 weitergeleitet. In der zweiten Signalverarbeitungseinrichtung 4 wird die Mitteilung in ein analoges Signal gewandelt, verstärkt und an die Hochfrequenzstufe 5 weitergegeben. In der Hochfrequenzstufe 5 wird das Signal auf eine Trägerfrequenz aufmoduliert und mittels der Antenne 6 gesendet.

Im mobilen Telefon des Anrufenden kann dieses Signal dann wie ein normales Sprachsignal verarbeitet werden und dem Anrufenden wiedergegeben werden.

Während der weiteren nonverbalen Kommunikation werden dann die den Tasten 13 und 14 zugeordneten Informationen wie 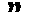 Ja" oder 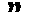 Nein" bei Betätigung der jeweiligen Taste erzeugt und dem Anrufenden gesendet.

## Patentansprüche

1. Telefon, insbesondere ein mobiles oder schnurloses Telefon,
**gekennzeichnet durch**
eine Bedieneinrichtung (10) zur Auswahl festgelegter Antworten für die Führung einer nonverbalen Kommunikation.

2. Telefon nach Anspruch 1,
**dadurch gekennzeichnet,** daß
die Bedieneinrichtung (10) einen besonderen Teil (12) aufweist, der die Auswahl der zuvor festgelegten Antworten erlaubt.

3. Telefon nach Anspruch 1 oder 2,
**dadurch gekenzeichnet,** daß
der besondere Teil (12) der Bedieneinrichtung (10) mindestens zwei Tasten (13,14) aufweist, wobei einer der Tasten (13) eine positive Antwort und der anderen Taste (14) eine negative Antwort zugeordnet ist.

4. Telefon nach einem der Ansprüche 1 bis 3,
**dadurch gekennzeichnet,** daß
eine Einrichtung (4,5,6,7,9) zur Erzeugung der festgelegten Antworten.

5. Telefon nach Anspruch 4,
**dadurch gekennzeichnet,** daß
die Einrichtung (4,5,6,7,9) ein Sprachsythesiser ist.

6. Telefon nach Anspruch 4,
**dadurch gekennzeichnet,** daß
die Einrichtung (4,5,6,7,9) einen nichtflüchtigen Speicher (9) aufweist, der zur Aufnahme von Sprachsignalen geeignet ist.

7. Telefon nach Anspruch 6,
**dadurch gekennzeichnet,** daß
ein Mikrophon (1) des Telefons dazu verwendet wird, für den nichtflüchtigen Speicher (9) bestimmte Sprachsignale aufzunehmen.

8. Telefon nach einem der Ansprüche 1 bis 7,
**dadurch gekennzeichnet,** daß
das Telefon einen Vibrationsmechanismus aufweist, welcher der Signalisierung eingehender Gespräche dient.
